# DEMANDE DE BREVET EUROPEEN

(11) **EP 4 497 886 A1**
(43) Date de publication de la demande: **29.01.2025**
(21) Numéro de dépôt: 24189794.1
(22) Date de dépôt: 19.07.2024
(51) Int. Cl.: E04B 2/86, A01G 9/02

(54) **MUR À COFFRAGE INTÉGRÉ VÉGÉTALISÉ ET PROCÉDÉS DE FABRICATION D'UN TEL MUR**

(30) Priorité: 28.07.2023 FR 2308172
(71) Demandeur: IDSB Ingenierie, 67720 Hoerdt (FR)
(72) Inventeur: Helmstetter, Didier, 67170 Olwisheim (FR); Dubois, Frédéric, 69720 Saint-Laurent-de-Mure (FR)
(74) Mandataire: Fidal Innovation

(57) **Abrégé**

Mur (1) à coffrage intégré végétalisé comportant un système (6) dit porteur, au moins en partie dans un volume (4) interne du mur de manière à le séparer en une première zone (41) et une deuxième zone (42), chacune desdites zones (41, 42) étant destinée à contenir au moins en partie du substrat (S), l'élément (60) de structure comprenant au moins une réservation (61) traversante mettant en communication fluidique la première zone (41) avec la deuxième zone (42).

## Description

### DOMAINE DE L'INVENTION

La présente invention se rapporte au domaine du bâtiment, et plus précisément au domaine des murs avec coffrage intégré (MCI), préfabriqués en usine avant d'être transportés et mis en place sur un chantier pour la construction de tout type de bâtiment à usage privé ou public, par exemple à destination d'habitation, de commerces ou de locaux professionnels, ou encore un ouvrage décoratif ou un ouvrage de lutte contre le bruit et/ou la pollution.

Plus précisément, l'invention se rapporte à un mur à coffrage intégré végétalisé.

### ARRIÈRE-PLAN TECHNOLOGIQUE

Dans le domaine du bâtiment, il est connu de préfabriquer en usine des murs à coffrage intégrés. Un tel mur comprend notamment une première peau destinée à être orientée vers l'extérieur du bâtiment, une deuxième peau destinée à être orientée vers l'intérieur du bâtiment, et des moyens de raccordement entre les deux peaux. Les deux peaux sont en général réalisées en béton. La deuxième peau notamment peut être une couche de parement en béton ou un matériau isolant de type PSE.

Un tel mur est préfabriqué en usine, à partir de béton coulé, puis il est transporté sur le site de son installation à l'aide d'un véhicule de transport spécialement équipé pour charger et décharger le mur, et également pour le maintenir stable pendant le transport.

Une fois implanté sur le chantier, le mur à coffrage intégré fait partie intégrante d'un bâtiment. Du béton est alors coulé pour combler l'espace entre les deux peaux. Le document EP1690993 décrit un exemple d'un tel mur à coffrage intégré.

Les peaux en béton, et plus particulièrement la peau extérieure, participent à minéraliser l'environnement du bâtiment. Or, les milieux urbains sont aujourd'hui des milieux fortement minéralisés, notamment par la nature des revêtements de sols, par exemple bitumeux, et par les constructions d'immeubles, ce qui tend à créer des îlots de chaleur dans les villes, c'est-à-dire des zones de stockage de chaleur qui est ensuite restituée notamment la nuit. La température de ces îlots de chaleur est d'autant plus élevée que la densité de population et de constructions immobilières y est élevée, contribuant à l'inconfort et à l'augmentation des problèmes de santé des populations habitant en ville. Dans certaines villes de France, les zones de surchauffe peuvent dépasser les 6°C.

Une solution connue est d'apporter de la végétation dans les milieux urbains. On parle alors de bio-climatisation. Toutefois, la nature des revêtements de sol complique l'implantation de végétaux : il faut changer la nature du sol, ce qui implique des travaux coûteux et peut causer des problèmes pour la circulation notamment des véhicules.

Il est alors connu d'apporter des structures formant des supports pour des végétaux, ces supports pouvant être posés sur une surface minérale et offrent un substrat pour des végétaux. Ces structures permettent ainsi d'apporter des végétaux en compléments de la végétation existante, partout où on ne peut pas en planter de nouveau, et permettent de rétablir la biodiversité urbaine ainsi que de lutter contre la pollution de l'air.

Ainsi, on connaît par exemple des structures en hauteur qui, en plus de former un support pour des végétaux, offrent également de l'ombre. On connaît également les murs végétalisés, permettant de supporter sensiblement verticalement des végétaux. Un avantage supplémentaire des murs végétalisés est qu'ils participent en outre à apporter une isolation acoustique au bâtiment.

De manière générale, un mur à végétaliser comprend une façade tournée vers l'extérieur qui est munie de moyens pour retenir un substrat et pour faire apparaître de la végétation prenant racine dans le substrat. La façade extérieure présente alors des ouvertures par lesquelles les végétaux émergent.

Le document WO2018/197819 décrit un exemple pour former un mur végétalisé à l'aide d'un système de végétalisation formé par un ensemble de plaques assemblées sur un cadre métallique. Les plaques servent de support pour des plantes. Le système de végétalisation est alors rapporté sur une façade avant d'un mur

Un mur à coffrage intégré peut également être végétalisé. Le document WO2016/142283 décrit un exemple dans lequel le mur comprend deux poteaux verticaux métallique placés aux extrémités du mur, et entre lesquels une peau intérieure et une peau extérieure sont fixées. Une des peaux, en l'occurrence la peau extérieure, est par exemple en métal afin de procurer un effet esthétique augmenté. Des poches sont formées dans la peau métallique, de sorte que lorsque du substrat pour végétaux est versé entre les deux peaux, le substrat émerge par les poches. Des végétaux poussant au niveau des poches sont alors visibles de l'extérieur.

Un inconvénient de cette réalisation est que le mur ainsi formé ne peut pas être utilisé comme un mur porteur du bâtiment, car l'espace entre les deux peaux, comblé par le substrat, ne peut plus intégrer de fonction structurelle. Si les poteaux métalliques peuvent remplir une telle fonction, il en résulte que la longueur du mur est nécessairement limitée. En outre, si plusieurs de ces murs végétalisés sont disposés adjacents les uns aux autres, la gestion du substrat, et notamment son irrigation, doit être mise en oeuvre mur par mur, ce qui la rend complexe et coûteuse.

Il existe donc un besoin pour un nouveau mur à coffrage intégré surmontant notamment les inconvénients précités.

Un premier objet de l'invention est de proposer un mur à coffrage intégré végétalisé avec une fonction porteuse.

Un deuxième objet de l'invention est de proposer un mur à coffrage intégré qui facilite la gestion du substrat.

Un troisième objet de l'invention est de proposer un mur à coffrage intégré offrant une isolation acoustique et/ou thermique.

Un quatrième objet de l'invention est de proposer un mur à coffrage intégré qui n'augmente pas ou peu les coûts de fabrication et de transport.

Un cinquième objet de l'invention est de proposer un mur à coffrage intégré avec un aspect esthétique.

### RÉSUMÉ DE L'INVENTION

Ainsi, selon un premier aspect, l'invention se rapporte à un mur à coffrage intégré végétalisé comportant :
- une première peau qui comporte au moins une ouverture traversante primaire ;
- une seconde peau qui est positionnée, suivant une direction transversale, à une distance déterminée de la première peau ;
- un volume interne défini entre la première peau et la deuxième peau sur lequel l'au moins une ouverture traversante primaire débouche et qui est destiné à contenir au moins en partie un substrat adapté à la culture de végétaux ;
- un système de raccordement qui est configuré pour raccorder la première peau et la seconde peau.

Le mur comporte notamment un système dit porteur. Ledit système porteur comprend au moins un élément de structure s'étendant suivant une direction verticale perpendiculaire à la direction transversale, et placé au moins en partie dans le volume interne du mur de manière à le séparer en une première zone et une deuxième zone. Chacune desdites zones est destinée à contenir au moins en partie ledit substrat. L'élément de structure comprend au moins une réservation traversante mettant en communication fluidique la première zone avec la deuxième zone.

Grâce à ces dispositions, le mur peut mur présenter fonction porteuse tout en assurant une continuité entre la première zone et la première, pour faciliter l'irrigation et/ou l'apport en nutriments dans chacune des zones.

Selon différents aspects, il est possible de prévoir l'une et/ou l'autre des caractéristiques ci-dessous prises seules ou en combinaison.

Selon un mode de réalisation, au moins un élément de structure du système porteur peut être une colonne en béton. En variante ou en combinaison, au moins un élément de structure du système porteur peut être un profilé métallique.

Selon un mode de réalisation, l'au moins un élément de structure peut comprendre au moins une première portion noyée dans la première peau ou au moins une deuxième portion noyée dans la deuxième peau.

Selon un mode de réalisation, l'au moins un élément de structure peut comprendre au moins une première portion noyée dans la première peau et au moins une deuxième portion noyée dans la deuxième peau. Ledit élément de structure peut alors former partie du système de raccordement.

Selon un mode de réalisation, la deuxième peau peut être formée au moins en partie par un panneau en matériau isolant thermique et/ou acoustique. De plus, ledit panneau peut comprendre au moins un élément de rigidification placé dans l'épaisseur du panneau, c'est-à-dire en contact avec la face interne ou en contact avec la face externe ou dans l'épaisseur à l'écart de la face interne et de la face externe.

Selon un mode de réalisation, le mur peut comprendre un système d'irrigation destiné à apporter de l'eau et/ou des nutriments audit substrat dans la première zone et la deuxième zone du volume interne du mur au travers de la au moins une réservation traversante.

Selon un mode de réalisation, le système d'irrigation peut comprendre un matériau poreux s'étendant dans la réservation traversante.

Selon un mode de réalisation, le matériau poreux peut être le substrat.

Selon un mode de réalisation le système d'irrigation peut comprendre un tuyau comprenant une entrée destinée à être connecté à une source en eau et/ou en nutriments, et qui s'étend au moins en partie dans la première zone et en partie dans la deuxième zone à travers la réservation traversante.

Selon un deuxième aspect, l'invention concerne un procédé de fabrication d'un mur à coffrage intégré tel que présenté ci-dessus. Le procédé comprend alors :
- une première étape de positionnement qui consiste à positionner, à l'intérieur d'un premier moule, au moins un moyen de coffrage qui est configuré pour définir l'une de la première peau ou de la deuxième peau ;
- une première étape de coulage qui consiste à couler, à l'intérieur du premier moule, un mélange hydraulique qui est destiné à constituer l'une de la première peau ou la deuxième peau ;
- une première étape de positionnement qui consiste à positionner les moyens de raccordement, ceci à l'intérieur du premier moule et en sorte qu'une partie dudit système de raccordement soit noyée à l'intérieur du mélange hydraulique
- une première étape de durcissement qui consiste à laisser ou à faire durcir le mélange hydraulique contenu dans le premier moule, ceci pour l'obtention de l'une de la première peau ou de la deuxième peau ;
- une deuxième étape de coulage qui consiste à couler, dans un deuxième moule, un mélange hydraulique destiné à constituer l'autre de la première peau ou de la deuxième peau ;
- une étape de retournement qui consiste à retourner un ensemble qui comporte au moins l'une de la première peau ou de la deuxième peau le système de raccordement ;
- une quatrième étape de positionnement qui consiste à positionner le système de raccordement à l'intérieur du mélange hydraulique contenu dans le deuxième moule ;
- une deuxième étape de durcissement qui consiste à faire ou à laisser durcir le mélange hydraulique contenu dans le deuxième moule, ceci pour l'obtention de l'autre de la première peau ou de la deuxième peau.

Au moins un élément de structure du système porteur peut être une colonne verticale en matériau à base de liant hydraulique associée à une armature métallique. De plus, après la première étape de coulage avant la première étape de durcissement, le procédé peut comprendre une première étape d'implantation qui consiste à implanter l'une d'une première portion ou d'une deuxième portion de l'armature à l'intérieur du mélange hydraulique contenu dans le premier moule et à positionner un coffrage de colonne qui est configuré pour définir la colonne à l'intérieur du mélange hydraulique contenu dans le premier moule.

Selon un mode de réalisation, le procédé peut comprendre de plus, après la deuxième étape de coulage et avant la deuxième étape de durcissement, une deuxième étape d'implantation qui consiste à implanter l'autre de la première portion ou de la deuxième portion de l'armature à l'intérieur du mélange hydraulique contenu dans le deuxième moule.

Selon un troisième aspect, l'invention concerne un procédé de fabrication d'un mur à coffrage intégré tel que présenté ci-dessus, ledit procédé comprenant :
- une première étape de positionnement qui consiste à positionner, à l'intérieur d'un premier moule, au moins un moyen de coffrage qui est configuré pour définir l'une de la première peau ou de la deuxième peau ;
- une première étape de coulage qui consiste à couler, à l'intérieur du premier moule, un mélange hydraulique qui est destiné à constituer l'une de la première peau ou la deuxième peau ;
- une première étape de positionnement qui consiste à positionner les moyens de raccordement, ceci à l'intérieur du premier moule et en sorte qu'une partie dudit système de raccordement soit noyée à l'intérieur du mélange hydraulique
- une première étape de durcissement qui consiste à laisser ou à faire durcir le mélange hydraulique contenu dans le premier moule, ceci pour l'obtention de l'une de la première peau ou de la deuxième peau ;
- une deuxième étape de coulage qui consiste à couler, dans un deuxième moule, un mélange hydraulique destiné à constituer l'autre de la première peau ou de la deuxième peau ;
- une étape de retournement qui consiste à retourner un ensemble qui comporte au moins l'une de la première peau ou de la deuxième peau le système de raccordement ;
- une quatrième étape de positionnement qui consiste à positionner le système de raccordement à l'intérieur du mélange hydraulique contenu dans le deuxième moule ;
- une deuxième étape de durcissement qui consiste à faire ou à laisser durcir le mélange hydraulique contenu dans le deuxième moule, ceci pour l'obtention de l'autre de la première peau ou de la deuxième peau.

Au moins un élément de structure du système porteur est un profilé métallique. De plus, le procédé comprend après la première étape de coulage et avant la première étape de durcissement, une première étape d'implantation qui consiste à implanter l'une de la première portion ou de la deuxième portion du profile à l'intérieur du mélange hydraulique contenu dans le premier moule.

Selon un mode de réalisation, le procédé peut comprendre de plus, après la deuxième étape de coulage et avant la deuxième étape de durcissement, une deuxième étape d'implantation qui consiste à implanter l'autre de la première portion ou de la deuxième portion du profilé à l'intérieur du mélange hydraulique contenu dans le deuxième moule.

Selon un quatrième aspect, l'invention concerne un procédé de fabrication d'un mur à coffrage intégré tel que présenté ci-dessus. Le procédé comprend :
- Une étape d'obtention d'un panneau comprenant au moins un élément de rigidification et qui est destiné à former la deuxième peau ;
- une première étape de positionnement qui consiste à positionner, à l'intérieur d'un premier moule, au moins un moyen de coffrage qui est configuré pour définir la première peau ;
- une première étape de coulage qui consiste à couler, à l'intérieur du premier moule, un mélange hydraulique qui est destiné à constituer la première peau ;
- une deuxième étape de positionnement qui consiste à positionner le système de raccordement dans l'élément de rigidification du panneau qui est destiné à former la deuxième peau, et à maintenir le panneau sur le système de raccordement ;
- une troisième étape de positionnement, qui consiste à positionner le système de raccordement à l'intérieur du mélange hydraulique contenu dans le premier moule ;
- une première étape de durcissement, qui consiste à faire ou laisser durcir le mélange hydraulique contenu dans ledit premier moule, ceci pour l'obtention de la première peau,
- une deuxième étape de mise en prise du système de raccordement avec ledit élément de rigidification pour fixer le système de raccordement au panneau.

Au moins un élément de structure du système porteur est une colonne verticale en matériau à base de liant hydraulique associée à une armature métallique, et en ce qu'il comprend après la première étape de coulage et avant la première étape de durcissement, une première étape d'implantation qui consiste à implanter l'une d'une première portion de l'armature à l'intérieur du mélange hydraulique contenu dans le premier moule et à positionner un coffrage de colonne, qui est configuré pour définir la colonne, à l'intérieur du mélange hydraulique contenu dans le premier moule.

### BRÈVE DESCRIPTION DES DESSINS

Des modes de réalisation de l'invention seront décrits ci-dessous par référence aux dessins, décrits brièvement ci-dessous :

[Fig. 1] représente une coupe horizontale d'un mur à coffrage intégré comprenant un système porteur, selon un mode de réalisation.

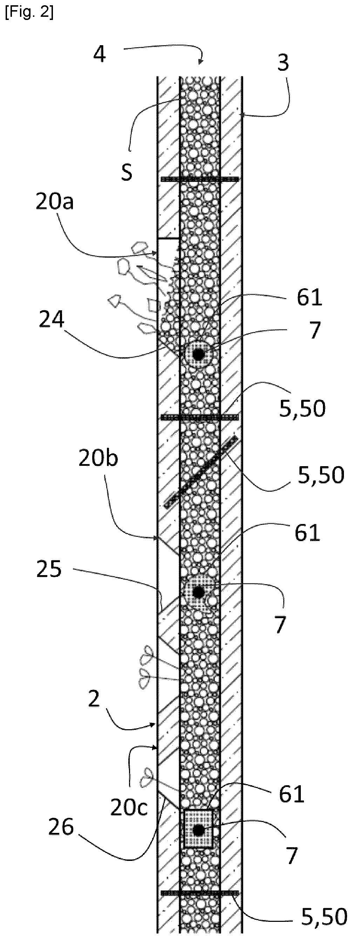

[Fig. 2] représente une coupe verticale au droit du substrat au niveau de réservations dans le système porteur de la figure 1.

[Fig. 3] représente une coupe horizontale d'un mur à coffrage intégré comprenant un système porteur, selon un autre mode de réalisation.

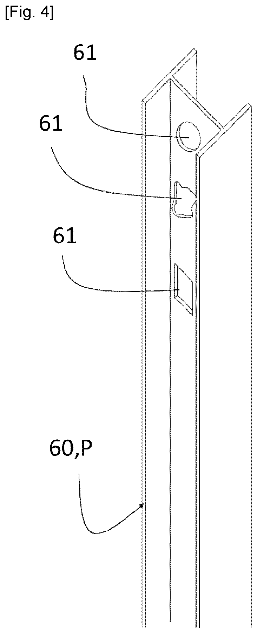

[Fig. 4] représente une vue tridimensionnelle partielle d'un élément de structure du système porteur de la figure 3.

[Fig. 5] représente une coupe horizontale d'un mur à coffrage intégré comprenant un système porteur, selon un autre mode de réalisation.

Sur les dessins, des références identiques désignent des objets identiques ou similaires.

### DESCRIPTION DÉTAILLÉE

La présente invention trouve une application particulière dans le domaine du bâtiment et, plus particulièrement, dans celui de la fabrication, en usine, de murs à coffrage intégré destinés à être implantés sur un chantier pour la réalisation d'un bâtiment comme un immeuble, un ouvrage décoratif ou un ouvrage de lutte contre le bruit et/ou la pollution.

L'invention concerne plus précisément un mur 1 à coffrage intégré (MCI) dit végétalisé, c'est-à-dire que le mur est destiné à présenter sur au moins une de ces faces des végétaux tels que des plantes ou des arbustes. Dans ce qui le mur à coffrage intégré végétalisé est désigné par « mur 1 » à des fins de clarté et de simplifications.

Un tel mur 1 est également appelé « mur préfabriqué » car il est fabriqué en partie en usine, transporté sur le chantier, puis installé sur le chantier pour former le mur 1 a proprement parlé.

Dans ce qui suit, on désigne une direction verticale, qui est prise en référence à la direction d'érection du mur 1. La direction verticale du mur peut être confondue avec la direction verticale naturelle, comme cela est présenté dans les figures, c'est-à-dire prise en référence au sol du chantier sur lequel le mur 1 est destiné à être installé. Il est cependant entendu que la direction verticale du mur 1 peut être inclinée par rapport à la direction verticale sans que cela n'ait d'impact sur l'invention.

On désigne également un plan horizontal, sensiblement orthogonal à la direction verticale du mur 1, le plan horizontal comprenant une direction longitudinale et une direction transversale perpendiculaires entre elles.

Dans ce qui suit on considère les directions verticale, longitudinale et transversales comme sensiblement rectilignes, bien qu'elles puissent admettre un rayon de courbure non infini.

Le mur comprend une première peau **2,** qui est de préférence sensiblement plane, mais pas nécessairement, et qui s'étend suivant la direction verticale et la direction longitudinale. La première peau 2 peut être réalisée en un matériau hydraulique comme du béton, en tant que plaque monobloc ou monolithique ou comprendre un matériau composite, isolant ou non isolant.

Le première peau 2 comporte au moins une ouverture **20** traversante primaire, c'est-à-dire qui s'étend depuis une première face **21** dite externe de la première peau 2 jusqu'à déboucher sur une deuxième face **22** dite interne de la deuxième peau 2. En pratique, la première peau 2 comprend une pluralité d'ouvertures 20 primaires réparties suivant les directions verticales et longitudinales. Comme cela sera explicité plus loin, les ouvertures 20 primaires peuvent présenter, sur une même face 21 externe, des formes et des dimensions différentes.

Le mur 1 comprend de plus une deuxième peau **3,** qui est également de préférence sensiblement plane, mais pas nécessairement, et qui s'étend suivant la direction verticale et la direction longitudinale. La deuxième peau 3 est positionnée, suivant la direction transversale, à une distance déterminée de la première peau 2 de manière à définir un volume **4** interne sur lequel la ou les ouvertures 20 primaires débouchent. La distance entre la première peau 2 et la deuxième peau 3 peut être constante suivant la direction verticale et/ou la direction longitudinale, mais pas nécessairement. La deuxième peau 3 peut également être réalisée en matériau hydraulique comme du béton, en tant que plaque monobloc ou monolithique ou comprendre un matériau composite, isolant ou non isolant.

La deuxième peau 3 comprend également une première face 31 dite externe, orientée en dehors du volume 4, et une deuxième face 32 dite interne, orientée vers l'intérieur du volume 4, et faisant face à la face 22 interne de la première peau 2.

Eventuellement, la deuxième peau 3 peut également comprendre une ou plusieurs ouvertures **30** traversantes dites secondaires, c'est-à-dire qui s'étendent depuis la face 31 externe jusqu'à déboucher sur la face 32 interne.

Le mur 1 comprend par ailleurs un système **5** de raccordement permettant de raccorder la première peau 2 à la deuxième peau 3, c'est-à-dire de manière à fixer leur position relativement l'une à l'autre. De manière générale, le moyen 5 de raccordement comprend une partie noyée dans le matériau de la première peau 2, et une portion noyée dans le matériau de la deuxième peau 3, de sorte que le moyen 5 de raccordement est fixé rigidement à la première peau 2 et à la deuxième peau 3. Le système 5 de raccordement sera explicité plus loin.

Le mur 1 comporte en outre un substrat **S** adapté à la culture de végétaux. Il s'agit notamment de matière organique, par exemple de terre, éventuellement mélangée avec des granulats minéraux pour fournir une accroche aux racines des végétaux. Le substrat S est placé dans au moins une partie du volume 4 interne. De préférence, le substrat S comble au moins en partie le volume 4 interne de manière à recouvrir chaque ouverture 20 primaire, et le cas échéant chaque ouverture 30 secondaire. En d'autres termes, le substrat S est visible et/ou accessible à travers les ouvertures 20 primaires, et le cas échéant les ouvertures 30 secondaires, depuis l'extérieur du mur 1.

Le mur 1 peut être destiné à être érigé de sorte que la face 21 externe de la première peau 2 soit tournée vers l'extérieur du bâtiment, tandis que la face 31 externe de la deuxième peau est tournée vers l'intérieur du bâtiment. A l'inverse, le mur 1 peut être destiné à être érigé de sorte que la face 21 externe de la première peau 2 soit tournée vers l'intérieur du bâtiment, tandis que la face 31 externe de la deuxième peau est tournée vers l'extérieur du bâtiment.

Le mur 1 selon l'invention est destiné à être un mur porteur du bâtiment, c'est-à-dire qu'il est destiné à apporter une fonction structurelle comme supporter le poids d'une partie au moins de la structure du bâtiment, par exemple la charpente et/ou les planchers du bâtiment, afin de le transférer aux fondations du bâtiment. Il participe ainsi à la stabilité et la résistance structurelle de l'ensemble du bâtiment.

A cet effet, le mur 1 comprend un système **6** dit porteur formé par au moins un élément **60** de structure. L'élément 60 de structure s'entend ici d'un élément participant à la fonction structurelle du mur 1. En d'autres termes, il peut s'agir d'un élément porteur, dans le sens qu'il est destiné à porter au moins une partie du poids de la structure du bâtiment. L'élément 60 de structure de structure s'étend au moins en partie suivant la direction verticale, et il est placé au moins en partie dans le volume 4 interne du mur 1. Par « s'étend au moins en partie suivant la direction verticale », on désigne ici la propriété de l'élément 60 de structure à présenter une dimension dans une direction d'extension qui plus grande que les deux autres, ladite direction d'extension comprenant au moins une composante suivant la direction verticale. De préférence, la direction d'extension est confondue ou sensiblement confondue avec la direction verticale. La dimension transversale de l'élément 60 de structure est supérieure à la dimension transversale du volume 4 interne, de sorte que l'élément 60 de structure comprend au moins une portion noyée dans l'une de la première peau 2 ou de la deuxième peau 3. L'élément 60 de structure sépare alors le volume 4 interne suivant la direction longitudinale en une première zone **41** et une deuxième zone **42.** La première zone 41 et la deuxième zone 42 contiennent chacune ledit substrat S.

Le système 6 porteur peut comprendre une pluralité d'éléments 60 de structure espacés suivant la direction longitudinale dans le volume 4 interne du mur 1, de manière à former une pluralité de zones 41, 42.

Le système 6 porteur peut en outre comprendre un ou plusieurs éléments de structure longitudinaux reliant deux éléments 60 de structure verticaux, de manière à former un portique.

Le mur 1 peut ainsi inclure une fonction porteuse pour le bâtiment. Cependant, la séparation du volume 4 interne en plusieurs zones 41, 42 complexifie l'irrigation du substrat S dans chaque zone 41, 41.

Selon l'invention, l'élément 60 de structure comprend alors au moins une réservation **61** traversante longitudinalement mettant en communication la première zone 41 avec la deuxième zone 42. La communication formée par la réservation 61 est de préférence de type fluidique, c'est-à-dire qu'elle permet le passage d'un fluide, aéraulique, hydraulique ou autre, entre la première zone 41 et la deuxième zone 42. En d'autres termes, la réservation 61 comprend une extrémité débouchant dans la première zone 41 et une deuxième extrémité débouchant dans la deuxième zone 42. La réservation 61 traversante permet alors d'utiliser un système 7 d'irrigation du substrat S pour apporter de l'eau et/ou des nutriments passant par la réservation traversante pour apporter de l'eau et/ou des nutriments de la première zone 41 à la deuxième zone 42 sans devoir passer par l'extérieur du mur 1.

Plus précisément, le système 7 d'irrigation peut comprendre un tuyau connecté à une entrée à une source en eau et/ ou nutriment, et qui s'étend en partie dans la première zone 41 et en partie dans la deuxième zone 42 du volume 4 interne en traversant l'élément 60 de structure. Le tuyau peut alors comprendre au moins deux sorties, à savoir une sortie dans la première zone 41 et une deuxième sortie dans la zone 42 du volume 4 interne. Lorsque le mur comprend plusieurs éléments 60 de structure, un seul tuyau peut traverser chaque élément 60 de structure pour amener de l'eau dans chaque zone 41, 42 du volume 4 interne. Le système 7 d'irrigation peut comprendre plusieurs tuyaux s'étendant longitudinalement dans chaque zone 41, 42, et répartis verticalement. Le système 7 d'irrigation peut en variante comprendre un unique tuyau disposé de manière à serpenter à travers les réservations 61 des éléments de structure. Le système 7 d'irrigation peut également comprendre un matériau poreux placé dans au moins une réservation 61 traversante d'au moins un élément 60 de structure. Le matériau poreux assure le passage fluidique entre deux zones 41, 42 par exemple par capillarité. Par exemple, le matériau poreux peut être le substrat S lui-même, de sorte que les réservation 61 assurent la continuité du substrat dans le volume 4 interne. Ainsi, une sortie d'eau est amenée par exemple dans une première zone 41 à l'aide d'un tuyau dont l'entrée est raccordée à une source en eau et/ou en nutriments, l'eau et/ou les nutriments étant transportés dans la deuxième zone 42 à travers le matériau poreux.

Chaque élément 60 de structure peut comprendre une ou plusieurs réservations 61 traversantes réparties suivant la direction verticale.

Ainsi, le système d'irrigation peut, à partir d'une unique source en eau et/ou en nutriments, être entièrement intégré dans le mur 1.

La section transversale d'une réservation 61 peut être de toute nature, par exemple carré, rectangulaire, triangulaire, ou encore non régulière. Selon un mode de réalisation, la section d'une réservation est circulaire, adaptée par exemple au passage d'un tuyau du système 7 d'irrigation.

Le ou les éléments 60 de structure peuvent être en béton ou en métal.

De préférence, chaque élément 60 de structure comprend au moins une portion noyée dans la première peau 2 ou la deuxième peau 3. Plus précisément, chaque élément 60 de structure peut comprendre une première portion noyée dans la première peau et/ou une deuxième portion noyée dans la deuxième peau 3. L'élément 60 de structure permet ainsi de reprendre au moins en partie les efforts exercés sur la première peau 2 et/ou la deuxième peau 3.

On va maintenant décrire plusieurs exemples de réalisation du mur 1.

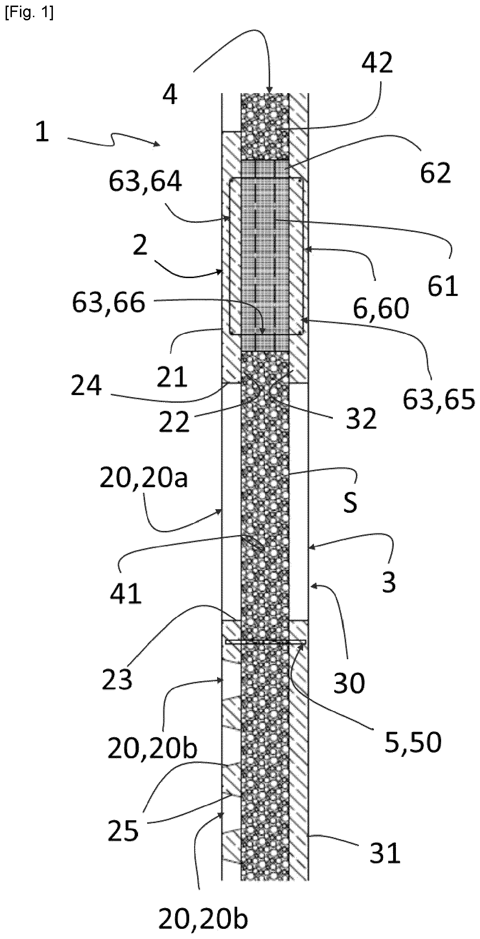

Selon un premier exemple de réalisation illustré notamment sur la figure 1, la première peau 2 et la deuxième peau 3 sont toutes les deux réalisées en béton. On notera que selon ce premier exemple, la première peau 2 définit, entre sa face 21 externe et sa face 22, un espace continu, c'est-à-dire qu'il ne comprend pas de discontinuité. De même, la deuxième peau 3 définit également un milieu continu entre sa face 31 externe et sa face 32 interne.

La première peau 2 peut comprendre au moins une ouverture 20 primaire définie par quatre rebords, à savoir deux rebords **23** verticaux et deux rebords **24** longitudinaux, de manière à définir une ouverture 20 primaire de forme sensiblement rectangulaire, appelée par la suite ouverture 20a primaire rectangulaire. L'ouverture 20a primaire rectangulaire peut être complétée d'un moyen de retenue, non représenté sur la figure 1, du substrat S qui recouvre en partie l'ouverture 20a primaire rectangulaire pour empêcher le substrat S de s'échapper sous l'effet de la gravité tout en le laissant accessible. Un tel moyen de retenu peut par exemple être une plaque perforée ou une grille, qui fournit en plus une accroche aux végétaux. Un autre exemple d'un moyen de retenu peut être un bac, s'étendant en saillie à partir de la face 21 externe de la première peau. Un rebord 24 longitudinal inférieur de l'ouverture 20a primaire rectangulaire peut également faire partie de tel moyen de retenu. Un tel rebord 24 longitudinal inférieur présente une inclinaison suivant la direction verticale, dirigée vers le bas depuis la face 21 externe vers la face 22 interne de la première peau 2. Le substrat S peut ainsi en partie reposer sur le rebord 24 longitudinal inférieur tout en étant guidé vers l'intérieur du mur 1, c'est-à-dire vers le volume 4 interne.

La première peau 2 peut en outre comprendre au moins une ouverture 20 primaire définit par un rebord 25 sensiblement de forme conique tronquée convergente. Plus précisément, le rebord **25** conique converge au moins en partie de la face 21 externe vers la face 22 interne de la première peau 20. Une telle ouverture est appelée dans ce qui suit ouverture 20b primaire convergente. Une telle ouverture 20b primaire convergente permet de combiner l'effet de végétalisation avec une augmentation de l'absorption acoustique. En effet, le substrat fait office d'absorbant acoustique. La forme conique des ouvertures 20b primaires convergente permet d'augmenter le coefficient d'absorption acoustique du mur 1 pour les sons venant du côté de la face 21 externe de la première peau. En plaçant la première peau 2 du côté extérieur du bâtiment, la pénétration des bruits venant de l'extérieur du bâtiment vers l'intérieur est diminuée.

La première peau 2 peut de plus comprendre au moins une ouverture 20 primaire définit par un rebord 26 sensiblement de forme conique tronquée divergente. Plus précisément, le rebord 26 conique diverge au moins en partie de la face 21 externe vers la face 22 interne de la première peau 20. Une telle ouverture est appelée dans ce qui suit ouverture 20c primaire divergente. Une telle ouverture 20c primaire divergente permet de retenir le substrat S et les végétaux à l'intérieur du mur 1 sans rapporter de moyens de retenues supplémentaires.

La deuxième peau 3 peut également comprendre une ouverture 30 secondaire traversante, qui est sensiblement similaire à l'ouverture 20a primaire rectangulaire de la première peau 2 et décrite ci-dessus. De manière immédiate, la deuxième peau 3 peut également comprendre une ou plusieurs ouvertures secondaires sensiblement similaires aux ouvertures 20b primaires convergentes et/ou aux ouvertures 20c divergentes de la première peau 2 décrites ci-dessus.

Le système 5 de raccordement comprend au moins un connecteur **50** sous forme d'une tige, par exemple métallique ou composite, dont une première extrémité est noyée dans la première peau 2 et l'autre extrémité est noyée dans la deuxième peau 3, de manière à maintenir une distance transversale fixe entre la première peau 2 et la deuxième peau 3. Un connecteur 50 peut s'étendre exclusivement suivant la direction transversale, ou s'étendre suivant une direction comprenant une composante transversale et une composante verticale et/ou longitudinale. En variante ou en combinaison, chaque connecteur 50 peut être fixé à l'une ou l'autre peau 2, 3 par vissage ou par collage.

Selon le premier exemple, l'élément 60 de structure du système 6 porteur comprend une colonne **62** verticale en matériau de construction à base de liant hydraulique associée à une armature **63** métallique. Dans ce qui suit, le matériau de la colonne 62 verticale est du béton. Plus précisément, l'armature 63 métallique comprend une première portion **64** prise dans la première peau 2, une deuxième portion **65** prise dans la deuxième peau 3, et une portion **66** intermédiaire, entre la première portion 64 et la deuxième portion 65, prise dans la colonne 62 en béton. La colonne 62 en béton présente une dimension transversale sensiblement égale à la dimension transversale du volume 4 interne. En d'autres termes, la colonne 62 emplie transversalement le volume 4 interne. En s'étendant ainsi à cheval dans la première peau 2 et la deuxième peau 3, le système 6 porteur permet d'associer la première peau 2 et la deuxième peau 3 à l'élément 60 de structure et d'augmenter ainsi la résistance mécanique de l'élément 60 de structure. En outre, l'élément 60 de structure participe au raccordement entre la première peau 2 et la deuxième peau 3, de sorte qu'il fait partie du système 5 de raccordement. Lorsque le nombre et la répartition de tels éléments 60 de structure sont suffisants, le système 5 de raccordement peut être totalement confondu avec les éléments 60 de structure, c'est-à-dire se passer des tiges 50.

Selon le premier exemple, la réservation 61 traversante est alors réalisée à travers la colonne 62 en béton.

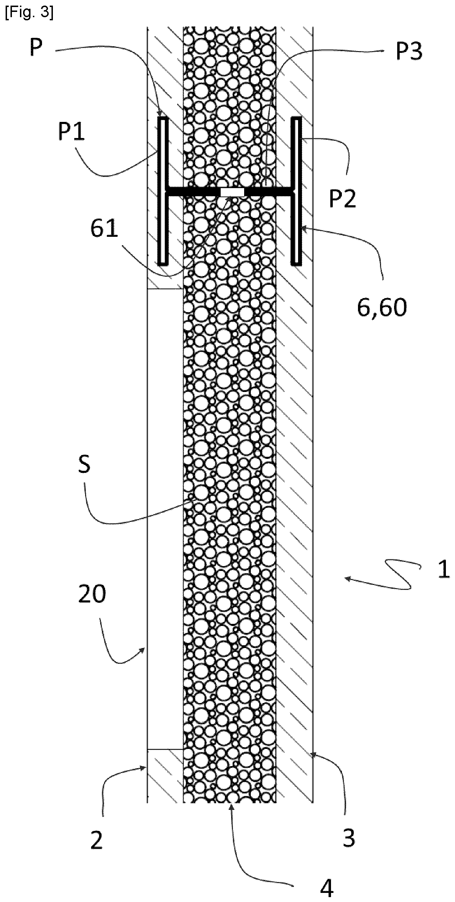

Un deuxième exemple du mur 1 va être décrit en référence à la figure 3.

Selon le deuxième exemple, la première peau 2 et la deuxième peau 3 sont en béton de manière identique au premier exemple.

Selon le deuxième exemple, la première peau 2 comprend une ouverture 20 primaire sensiblement identique à l'ouverture 20a primaire rectangulaire décrite dans le premier exemple de réalisation. La deuxième peau 3 ne comprend pas d'ouvertures secondaires. Sans reprendre l'ensemble de la description faite pour le premier exemple, il est immédiat que l'ensemble des dispositions décrites pour les ouvertures 20 primaires et les ouverture 30 secondaire du premier exemple peuvent être reprises ici.

Selon le deuxième exemple, le système 6 porteur comprend au moins un élément 60 de structure qui est un profilé **P** vertical métallique par exemple en H, comprenant deux branches P1, P2 sensiblement parallèles longitudinales reliée par une branche P3 transversale. Une première branche P1 longitudinale est noyée dans la première peau 2, la deuxième branche P2 longitudinale est noyée dans la seconde peau 3 et la branche P3 transversale traverse entièrement le volume 4 interne.

La réservation 61 traversante peut alors être formée dans la branche P3 transversale.

Le profilé P métallique peut prendre d'autres formes, par exemple en 1 ou en tube.

Le système 6 porteur du premier exemple peut être combiné avec le système 6 porteur du deuxième exemple dans un même mur 1, qui comportera alors un système 6 porteur combinant un élément 60 de structure comprenant un poteau 62 en béton associé à une armature métallique selon le premier exemple avec un élément de structure 60 comprenant un profilé P métallique selon le deuxième exemple.

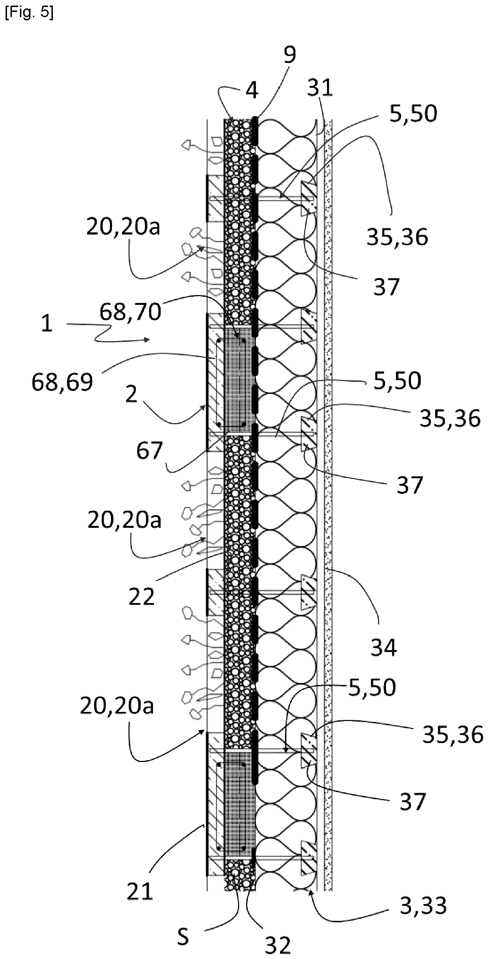

Selon un troisième exemple illustré sur la figure 5, le mur 1 intègre une isolation acoustique et/ou thermique distincte de celle apportée éventuellement par le substrat S. Le mur peut alors être qualifié de mur à coffrage et isolation intégrées (MCII). Plus précisément, selon le troisième exemple, la première peau 2 est réalisée en béton, de manière identique à ce qui a été décrit pour le premier exemple et le deuxième exemple. La deuxième peau 3 est réalisée en matériau avec une fonction supplémentaire, par exemple d'isolation thermique et/ou acoustique, et définit un milieu continu entre sa face 31 externe et sa face 32 interne. Selon un mode de réalisation, la deuxième peau 3 est réalisée à partir en partie par un panneau 33 en matériau avec une fonction supplémentaire d'isolation, par exemple d'isolation thermique et/ou acoustique. Le panneau 33 est par exemple réalisé au moins en partie en laine minérale, par exemple laine de roche ou laine de verre, en laine végétale, par exemple en laine de chanvre, laine de lin, laine de coton, laine de bois ou autre. La laine végétale peut être associée à un autre matériau qui réduit voire empêche sa dégradation, en particulier son pourrissement, par exemple un liant hydraulique et/ou synthétique, telle qu'une résine. En variante ou en combinaison, le panneau 33 peut comprendre un textile synthétique et/ou un géotextile, éventuellement associé là encore à un matériau qui réduit voire empêche sa dégradation. En variante ou en combinaison, le panneau 33 peut être réalisé tout ou en partie en PSE (polystyrène expansé). Le panneau 33 peut être rigide ou semi-rigide, c'est-à-dire qu'il ne se déforme pas ou peu sous l'effet des contraintes lors de la fabrication et/ou de la manipulation du mur 1 pour son installation.

Une couche **34** dite de parement peut être rapportée en vis-à-vis de la face 31 externe de la deuxième peau 3. La couche 34 de parement est par exemple réalisée en béton, en plâtre en panneau OSB (Oriented Straight Board), en panneau tripli, en MDF (Medium Density Fiberboard) ou encore en panneau de particules à base de bois ou en panneau composite. La couche 34 de parement peut recevoir un habillage.

La première peau 2 est en béton, de manière identique au premier exemple et au deuxième exemple. Elle peut comprendre une ouverture 20 primaire sensiblement identique à l'ouverture 20a primaire rectangulaire, et/ou sensiblement une ouverture 20 primaire sensiblement identique à l'ouverture 20b primaire convergente, et/ou sensiblement une ouverture 20 primaire sensiblement identique à l'ouverture 20c primaire divergentes, telles que décrites plus haut. La première peau 2 peut en outre comprendre une ou plusieurs ouvertures prévues pour former par exemple des portes ou des fenêtres

Selon le troisième exemple, la deuxième peau 3 est dépourvu d'ouverture 30 primaire. Une ou plusieurs ouvertures peuvent toutefois être prévues pour former par exemple des portes ou des fenêtres.

Le panneau 33 est raccordé à la première peau 2 à l'aide du système 5 de raccordement comprenant au moins un connecteur 50 sous forme de tige qui comprend une première extrémité noyée dans la première peau 2 et une deuxième extrémité noyée dans la deuxième peau 3. Plus précisément, à cet effet, le panneau 33 est munie d'un élément **35** de rigidification pour y ancrer un connecteur 50 du système 5 de raccordement. Par ancrage, on désigne ici tout moyen de fixation, notamment par vissage, par collage ou par scellement. Par exemple, un tel élément 35 de rigidification peut comprendre une encoche **36** pratiquée en creux sur la face 31 externe de la deuxième peau 3, et qui est destinée à contenir un matériau plus rigide que le matériau du panneau 33. Un tel matériau est par exemple du béton **37** coulé dans l'encoche 36 et durci. En variante, le matériau coulé dans l'encoche 36 est de la résine, ou tout autre matériau pouvant être coulé et durci de manière à procurer la résistance mécanique adéquate. L'encoche 36 est alors par exemple en forme de queue d'aronde, ou toute autre géométrie de verrouillage de forme, pour empêcher le matériau placé à l'intérieur d'en sortir. En pratique, une pluralité d'encoches 36 sont pratiquées sur la face 31 externe de la deuxième peau 3 afin de correspondre au nombre de connecteurs 50 utilisés pour obtenir le raccordement suffisamment robuste entre la première peau 2 et la deuxième peau 3. Chaque encoche 36 peut s'étendre longitudinalement sur la surface 31 externe de la deuxième peau 3, ou rester ponctuelle. La couche 34 de parement permet alors de masquer les encoches 36.

De manière générale, l'élément 35 de rigidification peut être localisé à n'importe quel endroit dans l'épaisseur du panneau 33, entre la face 31 externe et la face 32 interne, et y compris sur la face 31 externe ou sur la face 32 interne. Notamment, des encoches similaires aux encoches 36 décrites ci-dessus peuvent être formées en creux sur la face 32 interne. En variante, des éléments rigides peuvent être placés dans l'épaisseur du panneau 33 à distance de la face 31 externe et de la face 32 interne. En d'autres termes, l'élément 35 de rigidification peut être en contact avec la face 31 externe ou la face 32 externe ou être formé dans la section courante.

Le mur 1 peut en outre comprendre un élément **9** intermédiaire, par exemple formant une barrière d'étanchéité ou de drainage, entre la face 32 interne de la deuxième peau 3 et le volume 4 interne, afin d'isoler fluidiquement la plaque 33 du substrat S. L'élément 9 d'étanchéité ou de drainage peut par exemple comprendre une membrane, un film, une feuille ou une plaque. L'élément 9 intermédiaire d'étanchéité ou de drainage est maintenu en position par rapport à la deuxième peau 3 par exemple à l'aide de collerettes dont sont pourvues les connecteurs 50, ou encore par collage ou par agrafage sur le panneau 33.

Selon le troisième exemple, l'élément 60 de structure du système 6 porteur peut comprendre une colonne **67** verticale en béton associé à une armature **68** métallique. Plus précisément, l'armature 68 métallique comprend une première portion **69** prise dans la première peau 2, et une deuxième portion **70** prise dans la colonne 67 verticale. La colonne 67 verticale en béton présente une dimension transversale sensiblement égale à la dimension transversale du volume 4 interne. En d'autres termes, la colonne 67 emplit transversalement le volume 4 interne. Le système 6 porteur permet de reprendre les efforts sur la première peau 2.

Le système 6 porteur selon le troisième exemple peut comprendre, en variante ou en combinaison, un élément 60 de structure sous la forme d'un profilé P métallique, dont une première portion P1 est prise dans la première peau 2, et qui vient en contact avec la face 32 interne de la deuxième peau ou, le cas échéant, avec l'élément 9 intermédiaire.

Le mur selon le troisième exemple permet, notamment grâce à la présence du panneau 33 d'isolation thermique et la présence du substrat S dans le volume 4 interne, de limiter les impacts sur le mur 1 causés par des différentiels de températures entre un côté et l'autre du mur 1, en l'occurrence entre l'intérieur et l'extérieur du bâtiment, ou d'une pièce d'un bâtiment, délimité en partie par le mur 1.

On observera que les dispositions des trois exemples décrits ci-dessus ne sont pas exclusives à chaque exemple, et peuvent être combinées entre elles dans un même mur 1.

L'invention concerne également un procédé de fabrication d'un mur 1 tel que présenté ci-dessus. Selon l'invention, le procédé de fabrication du mur 1 est réalisé au moins en partie en usine, de sorte que le mur 1 est amené préfabriqué sur le chantier avant d'être finalisé.

Selon un premier mode de réalisation, le procédé de fabrication du mur 1 peut comprendre :
- une première étape de positionnement qui consiste à positionner, à l'intérieur d'un premier moule, au moins un moyen de coffrage qui est configuré pour définir la première peau 2 ainsi que, le cas échéant moins une partie d'une ouverture 20 primaire traversante ;
- une première étape de coulage qui consiste à couler, à l'intérieur du premier moule, un mélange hydraulique, par exemple du béton, qui est destiné à constituer la première peau 2 ;
- une deuxième étape de positionnement qui consiste à positionner le système 5 de raccordement, ceci à l'intérieur du premier moule et en sorte qu'une partie dudit système 5 de raccordement soit noyée à l'intérieur du mélange hydraulique qui est destiné à constituer la première peau 2 ;
- une première étape de durcissement qui consiste à laisser ou à faire durcir (notamment par chauffage et/ou à l'intérieur d'une étuve) le mélange hydraulique contenu dans le moule, ceci pour l'obtention de la première peau 2 ;
- une troisième étape de positionnement qui consiste à positionner, à l'intérieur d'un deuxième moule, au moins un moyen de coffrage qui est configuré pour définir la deuxième peau 3 ainsi que, le cas échéant moins une partie d'une ouverture 30 traversante secondaire ;
- une deuxième étape de coulage qui consiste à couler, dans le deuxième moule, un mélange hydraulique, par exemple du béton, destiné à constituer la seconde peau 3 ;
- une étape de retournement qui consiste à retourner un ensemble qui comporte au moins la première peau 2 et le système 5 de raccordement ;
- une quatrième étape de positionnement qui consiste à positionner, par exemple notamment à noyer, le système 5 de raccordement, plus particulièrement une autre partie du système 5 de raccordement, à l'intérieur du mélange hydraulique contenu dans ledit deuxième moule ;
- une deuxième étape de durcissement qui consiste à faire ou à laisser durcir (notamment par chauffage et/ou à l'intérieur d'une étuve) le mélange hydraulique contenu dans ledit deuxième moule, ceci pour l'obtention de la seconde peau 3.

Ces étapes permettent notamment d'obtenir un mur 1 comprenant une première peau 2 et une deuxième peau 3 conformes aux premiers et deuxièmes exemples de réalisation d'un mur 1 décrits ci-dessus.

L'étape de retournement et la quatrième étape de positionnement sont de préférence réalisées successivement directement l'une à la suite de l'autre, à l'aide d'un même engin de manutention.

La première étape de positionnement suivie de la première étape de coulage peut être réalisée simultanément à la deuxième étape de positionnement suivie de la deuxième étape de coulage, en prenant soin que le mélange hydraulique dans le deuxième moule n'ait pas encore durci pour la quatrième étape de positionnement.

Afin de réaliser le mur 1 selon le premier exemple et lui conférer une fonction porteuse, le procédé de fabrication comprend de plus, après la première étape de coulage et avant la première étape de durcissement, une première étape d'implantation, qui consiste à implanter l'armature 63, et plus particulièrement la première portion 64 de l'armature 63 et à positionner un coffrage de colonne qui est configuré pour définir la colonne 62 à l'intérieur du mélange hydraulique contenu dans le premier moule. Un tel coffrage pour la colonne 62 peut être réalisé à l'aide de panneaux d'OSB (Oriented Straight Board), de tôles perforées ou de métal déployé de type Nerlat ou Nergalto, de panneaux de bois ou tout autre matériau biodégradable. Un tel coffrage peut prévoir la formation d'au moins une réservation 61 traversante, par exemple à l'aide de fourreaux en matériau biodégradable. Le procédé comprend de plus, après l'étape de retournement et avant la deuxième étape de durcissement, une deuxième étape d'implantation, qui consiste à implanter l'armature 63 et plus précisément la deuxième portion 65 de l'armature 63, à l'intérieur du mélange hydraulique contenu dans le deuxième moule, à positionner le coffrage de colonne dans le deuxième moule.

Le mur préfabriqué ainsi obtenu est transporté sur le site du chantier et installé sur un socle, qui repose directement ou indirectement sur le sol, de sorte que la direction verticale du mur coïncide sensiblement avec la direction verticale naturelle. Le cas échéant, si de telles dispositions n'ont pas déjà être mises en place, des dispositions pour former les réservations 61 traversantes dans la colonne 62 sont mises en oeuvre. Le matériau pour la colonne 62 est alors coulé à l'intérieur du coffrage de colonne, emprisonnant la portion 66 intermédiaire de l'armature métallique. La colonne 62 comprend alors par exemple une portion s'étendant sous la surface du socle, et de préférence sous la surface du sol, pour être solidarisé à et s'intégrer en partie dans les fondations. Le coffrage de colonne peut rester en place ou être retiré. Le système 7 d'irrigation est alors installé, et le volume 4 interne peut être comblé en partie ou totalement, hors l'espace pris par la colonne 62 avec du substrat S.

Afin de réaliser un mur 1 selon le deuxième exemple et lui conférer une fonction porteuse, le procédé de fabrication comprend de plus, après la première étape de coulage et avant la première étape de durcissement, une première étape d'implantation du profilé P vertical métallique, qui consiste à implanter une première portion du profilé P métallique, par exemple la première branche P1 longitudinale, à l'intérieur du mélange hydraulique contenu dans le premier moule. Le procédé comprend de plus, après l'étape de retournement et avant la deuxième étape de durcissement, une deuxième étape d'implantation, qui consiste à implanter une deuxième portion du profilé P métallique, par exemple la deuxième branche P longitudinale, à l'intérieur du mélange hydraulique contenu dans le deuxième moule. Le profilé P métallique pour comprendre une ou plusieurs réservations 61 traversantes formées avant la première étape d'implantation.

Le mur ainsi obtenu est transporté sur le site du chantier et installé sur un socle, qui repose directement ou indirectement sur le sol, de sorte que la direction verticale du mur coïncide sensiblement avec la direction verticale naturelle. Le cas échéant, si de telles dispositions n'ont pas déjà être mises en place, des dispositions pour former les réservations 61 traversantes dans le profilé P métallique sont mises en oeuvre. Le profilé P métallique émerge verticalement au-delà de la première peau 2 et de la deuxième peau 3, vers le bas, pour être solidarisé à des fondations par exemple par un système d'encuvement ou de scellement. Le système 7 d'irrigation est alors installé, et le volume 4 interne peut être comblé en partie ou totalement, hors l'espace pris par le profilé P métallique, avec du substrat S. Plus précisément, chaque zone 41, 42 est remplie en partie ou totalement par le substrat S.

Le procédé de fabrication ainsi décrit implique la formation de la première peau 2 avant la deuxième peau 3. Toutefois, la deuxième peau 3 peut être formée avant la première peau 2. Ainsi, selon un deuxième mode de réalisation, le procédé de fabrication du mur 1 peut comprendre :
- une première étape de positionnement qui consiste à positionner, à l'intérieur d'un premier moule, au moins un moyen de coffrage qui est configuré pour définir la deuxième peau 3 ainsi que, le cas échéant moins une partie d'une ouverture 30 secondaire traversante ;
- une première étape de coulage qui consiste à couler, à l'intérieur du premier moule, un mélange hydraulique qui est destiné à constituer la deuxième peau 3 ;
- une deuxième étape de positionnement qui consiste à positionner le système 5 de raccordement, ceci à l'intérieur du premier moule et en sorte qu'une partie dudit système 5 de raccordement soit noyée à l'intérieur du mélange hydraulique qui est destiné à constituer la deuxième peau 3 ;
- une première étape de durcissement qui consiste à laisser ou à faire durcir (notamment par chauffage et/ou à l'intérieur d'une étuve) le mélange hydraulique contenu dans le moule, ceci pour l'obtention de la deuxième peau 3 ;
- une troisième étape de positionnement qui consiste à positionner, à l'intérieur d'un deuxième moule, au moins un moyen de coffrage qui est configuré pour définir la première peau 2 ainsi que, le cas échéant moins une partie d'une ouverture 20 primaire traversante ;
- une deuxième étape de coulage qui consiste à couler, dans le deuxième moule, un mélange hydraulique destiné à constituer la première peau 2 ;
- une étape de retournement qui consiste à retourner un ensemble qui comporte au moins la deuxième peau 3 et le système 5 de raccordement ;
- une quatrième étape de positionnement qui consiste à positionner, par exemple notamment à noyer, le système 5 de raccordement, plus particulièrement une autre partie du système 5 de raccordement, à l'intérieur du mélange hydraulique contenu dans ledit deuxième moule ;
- une deuxième étape de durcissement qui consiste à faire ou à laisser durcir (notamment par chauffage et/ou à l'intérieur d'une étuve) le mélange hydraulique contenu dans ledit deuxième moule, ceci pour l'obtention de la première peau 2.

Ces étapes permettent notamment d'obtenir un mur 1 comprenant une première peau 2 et une deuxième peau 3 conformes aux premiers et deuxièmes exemples de réalisation d'un mur 1 décrits ci-dessus. Sans répéter l'ensemble de la description pour l'obtention du mur 1 selon le premier exemple et pour l'obtention du mur 1 selon le deuxième exemple, il est immédiat que la colonne 62 en béton et/ou le profilé P métallique peuvent être implantés pendant le procédé de fabrication en adaptant les étapes à l'ordre de formation de la première peau 2 et de la deuxième peau 3.

Selon un troisième mode de réalisation, le procédé de fabrication du mur 1 peut comprendre :
- Une étape d'obtention d'un panneau 33 comprenant au moins un élément 35 de rigidification, et qui est destiné à former la deuxième peau 3 ;
- une première étape de positionnement qui consiste à positionner, à l'intérieur d'un premier moule, au moins un moyen de coffrage qui est configuré pour définir la première peau 2 ainsi que, le cas échéant moins une partie d'une ouverture 20 primaire traversante ;
- une première étape de coulage qui consiste à couler, à l'intérieur du premier moule, un mélange hydraulique, par exemple du béton, qui est destiné à constituer la première peau 2 ;
- une deuxième étape de positionnement qui consiste à positionner le système 5 de raccordement dans l'élément (35) de rigidification du panneau 33 qui est destiné à former la deuxième peau 3, et à maintenir le panneau 33 sur le système 5 de raccordement,
- une troisième étape de positionnement, qui consiste à positionner, par exemple à noyer, le système 5 de raccordement à l'intérieur du mélange hydraulique contenu dans le premier moule ;
- une première étape de durcissement, qui consiste à faire ou laisser durcir, (notamment par chauffage et/ou à l'intérieur d'une étuve) le mélange hydraulique contenu dans ledit premier moule, ceci pour l'obtention de la première peau 2 ;
- une étape de mise en prise du système 5 de raccordement avec ledit élément 35 de rigidification pour fixer le système 5 de raccordement au panneau 33.

La première étape de durcissement et la deuxième étape de durcissement peuvent être réalisées simultanément. La première étape de durcissement peut être réalisée successivement directement après la troisième étape de positionnement, avant la deuxième étape de coulage.

L'élément 35 de rigidification est par exemple une encoche 36 sur la face 31 externe du panneau 33 formant la deuxième peau 3. Dans ce cas, le procédé peut comprendre une deuxième étape de coulage qui consiste à couler un matériau, par exemple un matériau hydraulique ou de la résine, dans l'encoche 36. Cette deuxième étape de coulage intervient alors après la deuxième étape de positionnement, et avant l'étape de mise en prise. En outre, dans ce cas, l'étape de mise en prise consiste à faire ou laisser durcir (notamment par chauffage et/ou à l'intérieur d'une étuve), le matériau coulé dans l'encoche 36 du panneau 33. L'étape de mise en prise est réalisée après la deuxième étape de positionnement, et peut être réalisée simultanément à la première étape de durcissement.

La deuxième étape de positionnement peut consister en la mise en place de bagues qui s'attachent par déformations élastiques sur tout ou partie des tiges 50 du système 5 de raccordement et bloquent la position du panneau 33 le long des tiges 50.

Ces étapes permettent notamment d'obtenir un mur 1 comprenant une première peau 2 et une deuxième peau 3 conformes au troisième exemple de réalisation d'un mur 1 décrits ci-dessus. Le cas échéant, le procédé comprend une étape de mise en place de l'élément 9 d'étanchéité, par exemple en le solidarisant du panneau 33 avant la troisième étape de positionnement, et de préférence avant la deuxième étape de positionnement.

Afin de réaliser le mur 1 selon le troisième exemple et lui conférer une fonction porteuse, le procédé de fabrication comprend de plus, après la première étape de coulage et avant la première étape de durcissement, une étape d'implantation qui consiste à implanter l'armature 68 métallique, et plus précisément la première portion 69 de l'armature 68, et à positionner un coffrage de colonne qui est configuré pour définir la colonne 67 à l'intérieur du mélange hydraulique contenu dans le premier moule. Un tel coffrage pour la colonne 67 peut être réaliser à l'aide de panneaux d'OSB (Oriented Straight Board), de tôles perforées ou de métal déployé de type Nerlat ou Nergalto, de panneaux de bois ou tout autre matériau biodégradable. Un tel coffrage peut prévoir la formation d'au moins une réservation 61 traversante, par exemple à l'aide de fourreaux en matériau biodégradable. Par exemple, l'étape d'implantation peut être mise en oeuvre avant la troisième étape de positionnement.

De manière immédiate, le procédé de fabrication du troisième exemple de réalisation peut être adapté lorsque l'élément 60 de structure est un profilé P métallique, dont une portion P1 est noyée dans la première peau 2.

Le mur préfabriqué ainsi obtenu est transporté sur le site du chantier et installé sur un socle, qui repose directement ou indirectement sur le sol, de sorte que la direction verticale du mur coïncide sensiblement avec la direction verticale naturelle. Le cas échéant, si de telles dispositions n'ont pas déjà être mises en place, des dispositions pour former les réservations 61 traversantes dans la colonne 67 sont mises en oeuvre. Le matériau pour la colonne 67 est alors coulé à l'intérieur du coffrage de colonne, emprisonnant la deuxième portion 70 de l'armature 68 métallique. La colonne 67 comprend alors par exemple une portion s'étendant sous la surface du socle, et de préférence sous la surface du sol, pour être solidarisé à et s'intégrer en partie dans les fondations. Le coffrage de colonne peut rester en place ou être retiré. Le système 7 d'irrigation est alors installé, et le volume 4 interne peut être comblé en partie ou totalement, hors l'espace pris par la colonne 67, avec du substrat S. Plus précisément, chaque zone 41, 42 est remplie en partie ou totalement par le substrat S.

Le procédé de fabrication peut comprendre encore une étape de mise en place d'un parement qui consiste à placer une couche 34 de parement sur le mur 1, et par exemple de placer une couche 34 de parement en vis-à-vis de la face 31 externe de la deuxième peau 3. Une telle étape est particulièrement adaptée pour le mur 1 selon le troisième exemple de réalisation, afin de masquer les encoches 36. La couche 34 de parement peut être placée en usine ou sur le chantier.

Le mur 1 ainsi formé permet avantageusement d'offrir un mur combinant les fonctions de mur végétalisé et de mur porteur. Il est ainsi possible de réaliser l'ensemble des murs d'une construction, qu'ils soient porteurs ou non porteurs, en tant que murs végétalisés. Le bâtiment peut alors présenter par exemple sur l'ensemble de sa façade extérieure de la végétation, améliorant la végétalisation en milieu urbain.

Le système 7 d'irrigation du substrat S demeure simple et peu coûteux. Le procédé de fabrication implique des techniques qui sont mises en oeuvre avec des équipements qui existent déjà, de sorte que la réalisation de ce type de mur demeure accessible économiquement et ne grève pas les coûts de réalisation du bâtiment.

Le mur 1 permet en outre d'offrir une isolation acoustique grâce à la présence du substrat S, éventuellement combinée avec des ouvertures 20b primaires convergentes, afin d'améliorer le confort acoustique à l'intérieur du bâtiment.

Le mur 1 permet également d'y introduire une ou plusieurs fonctions supplémentaires grâce à la deuxième peau 3, notamment lorsque le mur 1 est réalisé selon le troisième exemple de réalisation à l'aide du panneau 33 qui peut conférer une ou plusieurs fonctions supplémentaires au mur 1, par exemple une fonction d'isolation thermique et/ou acoustique.

En plaçant le système 6 porteur à l'intérieur du volume 4 interne, l'épaisseur du mur 1 selon l'invention demeure similaire à celle des murs qui sont uniquement végétalisés ou uniquement porteurs.

## Revendications

1. Mur (1) à coffrage intégré végétalisé comportant :
- une première peau (2) qui comporte au moins une ouverture (20, 20a, 20b, 20c) traversante primaire ;
- une seconde peau (3) qui est positionnée, suivant une direction transversale, à une distance déterminée de la première peau (2) ;
- un volume (4) interne défini entre la première peau (2) et la deuxième peau (3) sur lequel l'au moins une ouverture (20, 20a, 20b, 20c) traversante primaire débouche et qui est destiné à contenir au moins en partie un substrat (S) adapté à la culture de végétaux ;
- un système (5) de raccordement qui est configuré pour raccorder la première peau (2) et la seconde peau (3) ;
Le mur (1) étant **caractérisé en ce qu'**il comporte un système (6) dit porteur, ledit système (6) porteur comprenant au moins un élément (60) de structure s'étendant suivant une direction verticale perpendiculaire à la direction transversale, et placé au moins en partie dans le volume (4) interne du mur de manière à le séparer en une première zone (41) et une deuxième zone (42), chacune desdites zones (41, 42) étant destinée à contenir au moins en partie ledit substrat (S), l'élément (60) de structure comprenant au moins une réservation (61) traversante mettant en communication fluidique la première zone (41) avec la deuxième zone (42).

2. Mur (1) à coffrage intégré selon la revendication 1, dans lequel au moins un élément (60) de structure du système (6) porteur est une colonne (62,67) en béton.

3. Mur à coffrage intégré selon la revendication 1 ou la revendication 2, dans lequel au moins un élément (60) de structure du système (6) porteur est un profilé (P) métallique.

4. Mur (1) à coffrage intégré selon l'une quelconque des revendications précédentes, dans lequel l'au moins un élément (60) de structure comprend au moins une première portion (64, 68, P1) noyée dans la première peau (2) ou au moins une deuxième portion (65, P2) noyée dans la deuxième peau (3).

5. Mur (1) à coffrage intégré selon la revendication précédente, dans lequel l'au moins un élément (60) de structure comprend au moins une première portion (64, 68, P1) noyée dans la première peau (2) et au moins une deuxième portion (65, P2) noyée dans la deuxième peau (3), ledit élément (60) de structure formant partie du système (5) de raccordement.

6. Mur (1) à coffrage intégré selon l'une quelconque des revendications précédentes, dans lequel la deuxième peau (3) est formée au moins en partie par un panneau (33) en matériau isolant thermique et/ou acoustique et dans lequel ledit panneau (33) comprend au moins un élément (35) de rigidification placé dans l'épaisseur du panneau (33).

7. Mur (1) à coffrage intégré selon l'une quelconque des revendications précédentes, comprenant un système (7) d'irrigation destiné à apporter de l'eau et/ou des nutriments audit substrat (S) dans la première zone (41) et la deuxième zone (42) du volume (4) interne du mur (1) au travers de la au moins une réservation (61) traversante.

8. Mur (1) à coffrage intégré selon la revendication précédente, dans lequel le système (7) d'irrigation comprend un matériau poreux s'étendant dans la réservation (61) traversante.

9. Mur (1) à coffrage intégré selon la revendication précédente, dans lequel le matériau poreux est le substrat.

10. Mur (1) à coffrage intégré selon l'une quelconque des revendications 7 à 9, dans lequel le système (7) d'irrigation comprend un tuyau comprenant une entrée destinée à être connecté à une source en eau et/ou en nutriments, et qui s'étend au moins en partie dans la première zone (41) et en partie dans la deuxième zone (42) à travers la réservation (61) traversante.

11. Procédé de fabrication d'un mur à coffrage intégré selon l'une quelconque des revendications précédentes, ledit procédé comprenant :
- une première étape de positionnement qui consiste à positionner, à l'intérieur d'un premier moule, au moins un moyen de coffrage qui est configuré pour définir l'une de la première peau (2) ou de la deuxième peau (3) ;
- une première étape de coulage qui consiste à couler, à l'intérieur du premier moule, un mélange hydraulique qui est destiné à constituer l'une de la première peau (2) ou la deuxième peau (3) ;
- une première étape de positionnement qui consiste à positionner les moyens de raccordement, ceci à l'intérieur du premier moule et en sorte qu'une partie dudit système (5) de raccordement soit noyée à l'intérieur du mélange hydraulique ;
- une première étape de durcissement qui consiste à laisser ou à faire durcir le mélange hydraulique contenu dans le premier moule, ceci pour l'obtention de l'une de la première peau (2) ou de la deuxième peau (3) ;
- une deuxième étape de coulage qui consiste à couler, dans un deuxième moule, un mélange hydraulique destiné à constituer l'autre de la première peau (2) ou de la deuxième peau (3) ;
- une étape de retournement qui consiste à retourner un ensemble qui comporte au moins l'une de la première peau (2) ou de la deuxième peau (3) le système (5) de raccordement ;
- une quatrième étape de positionnement qui consiste à positionner le système (5) de raccordement à l'intérieur du mélange hydraulique contenu dans le deuxième moule ;
- une deuxième étape de durcissement qui consiste à faire ou à laisser durcir le mélange hydraulique contenu dans le deuxième moule, ceci pour l'obtention de l'autre de la première peau (2) ou de la deuxième peau (3),
le procédé étant **caractérisé en ce qu'**au moins un élément (60) de structure du système (6) porteur est une colonne (62) verticale en matériau à base de liant hydraulique associée à une armature (63) métallique, et **en ce qu'**il comprend après la première étape de coulage avant la première étape de durcissement, une première étape d'implantation qui consiste à implanter l'une d'une première portion (64) ou d'une deuxième portion (65) de l'armature (63) à l'intérieur du mélange hydraulique contenu dans le premier moule et à positionner un coffrage de colonne qui est configuré pour définir la colonne (62) à l'intérieur du mélange hydraulique contenu dans le premier moule.

12. Procédé selon la revendication précédente, comprenant de plus, après la deuxième étape de coulage et avant la deuxième étape de durcissement, une deuxième étape d'implantation qui consiste à implanter l'autre de la première portion (64) ou de la deuxième portion (65) de l'armature (63) à l'intérieur du mélange hydraulique contenu dans le deuxième moule.

13. Procédé de fabrication d'un mur à coffrage intégré selon l'une quelconque des revendications 1 à 10, ledit procédé comprenant :
- une première étape de positionnement qui consiste à positionner, à l'intérieur d'un premier moule, au moins un moyen de coffrage qui est configuré pour définir l'une de la première peau (2) ou de la deuxième peau (3) ;
- une première étape de coulage qui consiste à couler, à l'intérieur du premier moule, un mélange hydraulique qui est destiné à constituer l'une de la première peau (2) ou la deuxième peau (3) ;
- une première étape de positionnement qui consiste à positionner les moyens de raccordement, ceci à l'intérieur du premier moule et en sorte qu'une partie dudit système (5) de raccordement soit noyée à l'intérieur du mélange hydraulique ;
- une première étape de durcissement qui consiste à laisser ou à faire durcir le mélange hydraulique contenu dans le premier moule, ceci pour l'obtention de l'une de la première peau (2) ou de la deuxième peau (3) ;
- une deuxième étape de coulage qui consiste à couler, dans un deuxième moule, un mélange hydraulique destiné à constituer l'autre de la première peau (2) ou de la deuxième peau (3) ;
- une étape de retournement qui consiste à retourner un ensemble qui comporte au moins l'une de la première peau (2) ou de la deuxième peau (3) le système (5) de raccordement ;
- une quatrième étape de positionnement qui consiste à positionner le système (5) de raccordement à l'intérieur du mélange hydraulique contenu dans le deuxième moule ;
- une deuxième étape de durcissement qui consiste à faire ou à laisser durcir le mélange hydraulique contenu dans le deuxième moule, ceci pour l'obtention de l'autre de la première peau (2) ou de la deuxième peau (3),
le procédé étant **caractérisé en ce qu'**au moins un élément (60) de structure du système (6) porteur est un profilé (P) métallique et **en ce qu'**il comprend après la première étape de coulage et avant la première étape de durcissement, une première étape d'implantation qui consiste à implanter l'une de la première portion (P1) ou de la deuxième portion (P2) du profile (P) à l'intérieur du mélange hydraulique contenu dans le premier moule.

14. Procédé de fabrication selon la revendication précédente, comprenant de plus, après la deuxième étape de coulage et avant la deuxième étape de durcissement, une deuxième étape d'implantation qui consiste à implanter l'autre de la première portion (P1) ou de la deuxième portion (P2) du profilé (P) à l'intérieur du mélange hydraulique contenu dans le deuxième moule.

15. Procédé de fabrication d'un mur à coffrage intégré selon l'une quelconque des revendications 1 à 10, ledit procédé comprenant :
- Une étape d'obtention d'un panneau (33) comprenant au moins un élément (35) de rigidification et qui est destiné à former la deuxième peau (3) ;
- une première étape de positionnement qui consiste à positionner, à l'intérieur d'un premier moule, au moins un moyen de coffrage qui est configuré pour définir la première peau (2) ;
- une première étape de coulage qui consiste à couler, à l'intérieur du premier moule, un mélange hydraulique qui est destiné à constituer la première peau (2) ;
- une deuxième étape de positionnement qui consiste à positionner le système (5) de raccordement dans l'élément (35) de rigidification du panneau (33) qui est destiné à former la deuxième peau (3), et à maintenir le panneau (33) sur le système (5) de raccordement ;
- une troisième étape de positionnement, qui consiste à positionner le système (5) de raccordement à l'intérieur du mélange hydraulique contenu dans le premier moule ;
- une première étape de durcissement, qui consiste à faire ou laisser durcir le mélange hydraulique contenu dans ledit premier moule, ceci pour l'obtention de la première peau (2),
- une deuxième étape de mise en prise du système (5) de raccordement avec ledit élément (35) de rigidification pour fixer le système (5) de raccordement au panneau (33),
le procédé étant **caractérisé en ce qu'**au moins un élément (60) de structure du système (6) porteur est une colonne (67) verticale en matériau à base de liant hydraulique associée à une armature (68) métallique, et **en ce qu'**il comprend après la première étape de coulage et avant la première étape de durcissement, une première étape d'implantation qui consiste à implanter l'une d'une première portion (69) de l'armature (67) à l'intérieur du mélange hydraulique contenu dans le premier moule et à positionner un coffrage de colonne, qui est configuré pour définir la colonne (67), à l'intérieur du mélange hydraulique contenu dans le premier moule.
